# EUROPEAN PATENT APPLICATION

(11) **EP 4 752 907 A1**
(43) Date of publication of application: **03.06.2026**
(21) Application number: 25161974.8
(22) Date of filing: 05.03.2025
(51) Int. Cl.: G21C 7/117

(54) **CONTROL ROD FIXING MECHANISM FOR CONTROL ROD ASSEMBLY USING BOLTED TIGHT FIT**

(30) Priority: 29.11.2024 KR 20240174344
(71) Applicant: KEPCO NUCLEAR FUEL CO., LTD., Daejeon 34057 (KR)
(72) Inventor: CHOI, Dae Woon, 34074 Daejeon (KR); HA, Dong Geun, 34023 Daejeon (KR); LEE, Shin Ho, 34119 Daejeon (KR); KIM, Seong Soo, 34130 Daejeon (KR); RYU, Joo Young, 34022 Daejeon (KR); KIM, Kyounghong, 34040 Daejeon (KR); LEE, Hak In, 30150 Sejong (KR); CHUN, Joo Hong, 49520 Busan (KR); KIM, Ba Leum, 30141 Sejong-si (KR); YOON, Ju Yeob, 34130 Daejeon (KR)
(74) Representative: Cabinet Netter

(57) **Abstract**

Proposed is a control rod fixing mechanism for a control rod assembly (100) with an assembly hole that passes through vertically, wherein the control rod fixing mechanism includes a control rod (110) inserted into the assembly hole and screw-fastened, an end plug (112) extended to an upper portion of the control rod and having a recessed fastening groove (112A) provided on an upper surface thereof and, and a cap member (120) provided with a fastening projection (121) that tightly fits into and secures the recessed fastening groove (112A) and configured to be inserted into and assembled with an open end of the assembly hole.

## Description

### CROSS REFERENCE TO RELATED APPLICATION

The present application claims priority to Korean Patent Application No. 10-2024-0174344, filed November 29, 2024, the entire contents of which are incorporated herein for all purposes by this reference.

### BACKGROUND

### Technical Field

The present disclosure relates to a control rod fixing mechanism for a control rod assembly using a bolted tight fit.

### Description of the Related Art

The control rod assembly used in the reactor core is generally composed of a spider structure and multiple control rods. These control rod assemblies play a role in safely and effectively controlling the nuclear fission reaction of the reactor by controlling the output of the reactor, performing a safety shutdown to quickly shut the reactor down when an emergency occurs, and performing a role of reactivity control to keep the constant chain reaction to continue by controlling the reactivity inside the reactor. Meanwhile, the control rod assembly may use various types of absorbers that absorb neutrons, may be referred to as absorber rods because they absorb neutrons, and are referred to as control rods hereinafter. For example, U.S. Patent No. 4,855,100 shows a method of fastening the screw portion of the upper end of the control rod to the screw hole in the connecting finger of the spider structure, then fixing it with a pin and welding it.

However, this type of control rod fixing structure requires an additional component called a pin, which increases the manufacturing cost, requires welding at all pin joints, complicates the process, and raises concerns about stress corrosion cracking due to heat influence from welding. In addition, it is difficult to replace or rotate the control rod, making maintenance inconvenient.

The foregoing is intended merely to aid in the understanding of the background of the present disclosure, and is not intended to mean that the present disclosure falls within the purview of the related art that is already known to those skilled in the art.

### Documents of Related Art

### [Patent Document]

Patent Document: U.S. Patent No. 4,855,100 (Date of Patent: August 08, 1989)

### SUMMARY

Accordingly, the present disclosure has been made keeping in mind the above problems occurring in the related art, and the present disclosure is intended to provide a control rod fixing mechanism for a control rod assembly that may stably fix the control rod by adopting a forced fit method instead of a pin connection method that may not be applied to an integral spider structure and moving the weld to a position where the load is applied, thereby improving structural soundness.

In order to achieve the objectives of the present disclosure as described above, a control rod fixing mechanism for a control rod assembly according to the present disclosure may include: a control rod inserted into the assembly hole and screw-fastened; an end plug extended to an upper portion of the control rod and having a recessed fastening groove provided on an upper surface thereof; and a cap member provided with a fastening projection that tightly fits into and secures the recessed fastening groove and configured to be inserted into and assembled with an open end of the assembly hole.

The cap member may have a straight-shaped fastening projection provided at a lower end and may be engaged in a tight fit with the recessed fastening groove of the end plug. Furthermore, the tight fit may prevent rotation of the control rod and secure it stably by friction between the recessed fastening groove and the fastening projection.

The recessed fastening groove of the end plug may be provided so that a tool may be engaged when screwing the control rod.

As described above, a control rod fixing mechanism for a control rod assembly according to the present disclosure is provided with an assembly hole that passes through vertically. The control rod fixing mechanism may include: a control rod inserted into the assembly hole and screw-fastened; an end plug extended to an upper portion of the control rod and having a recessed fastening groove provided on an upper surface thereof; and a cap member provided with a fastening projection that tightly fits into and secures the recessed fastening groove and configured to be inserted into and assembled with an open end of the assembly hole. The present disclosure eliminates the pin parts and welding used in the related art, thereby removing the need for a separate member, pin, to assemble the control rod to the finger. This results in effects that reduced manufacturing costs, relocation of the heat-affected zone to improve structural integrity, and the application of a forced fit to prevent rotation and ensure the stability of the absorption rod throughout the service life of the control rod assembly.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a sectional view showing a control rod assembly according to an embodiment of the present disclosure;
FIGS. 2A and 2B are perspective views of an upper part of a control rod and a cap member according to the embodiment of the present disclosure, respectively.

### DETAILED DESCRIPTION

Specific structural or functional descriptions presented in the embodiments of the present disclosure are merely exemplified for the purpose of explaining embodiments according to the concept of the present disclosure, and embodiments according to the concept of the present disclosure may be implemented in various forms. In addition, the descriptions presented should not be construed as being limited to the embodiments described in the present specification but should be understood to include all modifications, equivalents, or substitutes included in the spirit and scope of the present disclosure.

Meanwhile, the terms used in this specification are only used to describe specific embodiments and are not intended to limit the present disclosure. Singular expressions include plural expressions unless the context clearly indicates otherwise. It should be understood that the terms "comprise" or "have" as used herein are intended to specify the presence of an implemented feature, number, step, operation, component, part, or combination thereof, but do not exclude in advance the possibility of the presence or addition of one or more other features, numbers, steps, operations, components, parts, or combinations thereof.

Hereinafter, embodiments of the present disclosure will be described in detail with reference to the accompanying drawings.

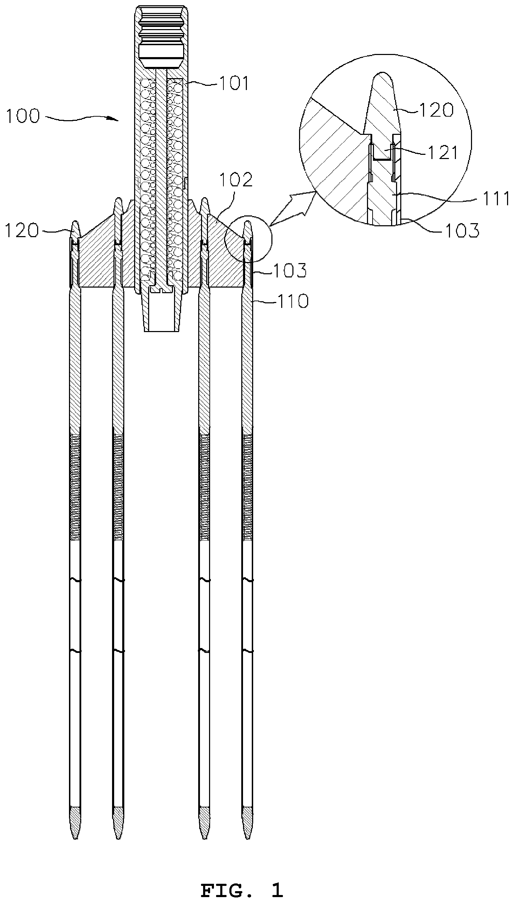

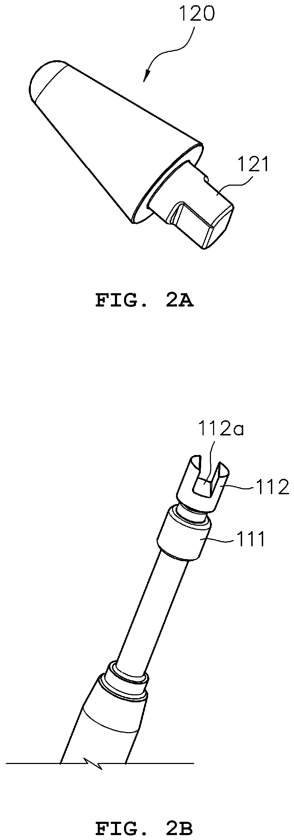

FIG. 1 is a sectional view showing a control rod assembly according to an embodiment of the present disclosure, and FIGS. 2A and 2B are perspective views of an upper part of a control rod and a cap member according to the embodiment of the present disclosure, respectively.

With reference to FIGS. 1, 2A, and 2B, the control rod assembly 100 according to an embodiment of the present disclosure includes a spider body 101 and a plurality of spider vanes 102 radially provided from the spider body 101, and a finger 103 having an assembly hole that passes through vertically with which an upper portion of the control rod 110 is assembled may be provided on each spider vane 102.

The control rod 110 is provided with a screw fastening part 111 having screw threads (not shown) provided in a portion of an upper part, and an end plug 112 is provided that extends to the upper part of the screw fastening part 111 and has a recessed fastening groove 112A provided on an upper surface.

Assembled at the top of the control rod 110 is a cap member 120 which is configured to achieve a tight fit with the end plug 112 to secure the control rod 110 to the finger 103, wherein the cap member 120 is provided with a fastening projection 121 that is fixed by a tight fit with the recessed fastening groove 112A. The fastening projection 121 is a straight-shaped, and the corresponding recessed fastening groove 112A is provided as a straight-shaped groove to achieve the tight fit with the fastening projection 121. This configuration prevents the rotation of the control rod 110 by the frictional force between the recessed fastening groove 112A and the fastening projection 121, thereby stably fixing the control rod 110 to the finger 103. Meanwhile, the recessed fastening groove 112A of the end plug 112 has the advantage of allowing a tool to be engaged therewith when fastening the screw of the control rod 110, making it easy to assemble the control rod 110.

For the control rod assembly according to the present disclosure configured in this manner, the control rod assembly process is as follows: the control rod 110 is inserted upward from a lower end of an assembly hole of the finger 103 and assembled with screws; the cap member 120 is inserted from the upper end of the assembly hole, so that the fastening projection 121 achieves the tight fit with the recessed fastening groove 112A, thereby fixing the control rod 110. Meanwhile, after the cap member 120 is assembled, a welding process may be added to the cap member 120 and the finger 103.

The present disclosure is not limited to the described embodiments and accompanying drawings. Various substitutions, modifications, and changes may be made without departing from its technical spirit, as will be apparent to those skilled in the art.

## Claims

1. A control rod fixing mechanism for a control rod assembly (100) with an assembly hole that passes through vertically, the control rod fixing mechanism comprising:
a control rod (110) inserted into the assembly hole and screw-fastened;
an end plug (112) extended to an upper portion of the control rod and having a recessed fastening groove (112A) provided on an upper surface thereof; and
a cap member (120) provided with a fastening projection (121) that tightly fits into and secures the recessed fastening groove (112A) and configured to be inserted into and assembled with an open end of the assembly hole.

2. The control rod fixing mechanism of claim 1, wherein the fastening projection (121) is straight-shaped.

3. The control rod fixing mechanism of claim 1 or 2, wherein the straight-shaped fastening projection (121) is provided at a lower end of the cap member (120).

4. The control rod fixing mechanism of one of claims 1-3 wherein the straight-shaped fastening projection (121) is engaged in a tight fit with the recessed fastening groove (112A) of the end plug (112).

5. The control rod fixing mechanism of one of claims 1-4, wherein the tight fit prevents rotation of the control rod and secures it stably by friction between the recessed fastening groove (112A) and the fastening projection (121).

6. The control rod fixing mechanism of one of claims 1-5, wherein the recessed fastening groove (112A) of the end plug (112) is provided so that a tool may be engaged when screwing the control rod.

7. The control rod fixing mechanism of one of claims 1-6, wherein the cap member (120) is configured to be coupled with a spider structure by welding.
